Europäisches Patentamt

European Patent Office

Office européen des brevets

(19)

(11) Veröffentlichungsnummer: **0 029 233**
**B1**

(12) # EUROPÄISCHE PATENTSCHRIFT

(45) Veröffentlichungstag der Patentschrift:
06.07.83

(21) Anmeldenummer: 80107057.4

(22) Anmeldetag: 14.11.80

(51) Int. Cl.³: **C 23 C 13/00, C 23 C 3/00,
F 21 V 7/22**

(54) **Verfahren zum Herstellen einer reflektierenden Oberfläche.**

(30) Priorität: **20.11.79 DE 2946713**

(43) Veröffentlichungstag der Anmeldung:
**27.05.81 Patentblatt 81/21**

(45) Bekanntmachung des Hinweises auf die Patenterteilung:
**06.07.83 Patentblatt 83/27**

(84) Benannte Vertragsstaaten:
**AT BE CH DE FR GB IT LI NL SE**

(56) Entgegenhaltungen:
**AT-B-158 860
CH-A-299 812
DE-A-2 211 764
DE-A-2 437 926
DE-A-2 743 670
DE-A-2 923 954
DE-B-1 014 407
DE-B-1 294 613**

(73) Patentinhaber: **BASF Farben + Fasern
Aktiengesellschaft, Am Neumarkt 30,
D-2000 Hamburg 70 (DE)**

(72) Erfinder: **Dors, Bernard, Dr. Dipl.-Chem.,
Rückertstrasse 1, D-4400 Münster (DE)**
Erfinder: **Kopka, Georg, Ing.-grad., Zum Hiltruper See 24,
D-4400 Münster (DE)**
Erfinder: **Pieser, Horst, Dipl.-Chem., Zum Roten
Berge 32, D-4400 Münster (DE)**

(74) Vertreter: **Habbel, Hans-Georg, Dipl.-Ing.,
Postfach 3429 Am Kanonengraben 11, D-4400 Münster
(DE)**

## Verfahren zum Herstellen einer reflektierenden Oberfläche

Die Erfindung bezieht sich auf ein Verfahren zum Herstellen einer reflektierenden Fläche, insbesondere für Scheinwerfer, Leuchten, Beleuchtungsgeräte oder andere reflektierende Oberflächen durch Aufbringen einer thermisch härtbaren Kunstharzpulverschicht auf ein Blech, härten dieser Schicht durch Einwirkung von thermischer Energie zu einem Überzug, der anschließend durch chemisches oder physikalisches Aufbringen mit einer reflektierenden Schicht überzogen wird.

Nach dem heutigen Stand der Technik wird nach dem Tiefziehen eines Bleches zu einer gekrümmten Fläche, z. B. zu einem Hohlspiegel, die Oberfläche, die noch Mikrorisse, Vertiefungen und andere Unregelmäßigkeiten aufweist, durch mechanisches Schleifen und/oder Polieren geglättet und anschließend durch aufeinanderfolgendes Aufbringen mehrerer Naßlackschichten unter Zwischentrocknung jeder einzelnen Schicht mit einer Lackschicht überzogen und anschließend durch Vakuumverdampfung mit einem Metallspiegel beschichtet.

Das Aufbringen der verschiedenen Lackschichten, das in der Regel durch Aufspritzen oder Tauchen erfolgt und die nachfolgende Trocknung der einzelnen Schichten im Trockenofen, erfordert einen großen Zeitaufwand.

Aus diesem Grunde hat man bereits in der DE-A-2 628 658 und der DE-A-2 743 670 vorgeschlagen, einen Teil der Lackschichten durch eine Pulverlackschicht zu ersetzen. Zu diesem Zweck wird auf die Reflektorfläche ein Lackpulver elektrostatisch aufgebracht und durch Erhitzen des Pulvers zu einer Schicht gehärtet, die man zur Einebnung und Beseitigung von Mikrorissen und Poren mit einer durch Spritzen oder Tauchen aufgebrachten Naßlackschicht abdeckt, trocknet bzw. härtet und anschließend durch Vakuumbedampfung metallisiert.

Gemäß der DE-A-2 211 764 wird bei einem Verfahren zum Verspiegeln von Oberflächen eine metallische spiegelnde Fläche durch Aufbringen einer Silbernitratlösung zusammen mit einem Reduziermittel erzeugt. Hierdurch ist es also bekannt, die Metallschicht nicht nur durch Aufdampfen, sondern auch durch chemische Abscheidung, zu erzeugen.

Aufgabe der vorliegenden Erfindung ist es, die Arbeitsweise zur Herstellung einer reflektierenden Fläche weiter zu vereinfachen, Arbeitsschritte einzusparen und dadurch die Anwendungsbereiche zu vergrößern.

Die Erfindung löst diese Aufgabe dadurch, daß die reflektierende Schicht durch Aufbringen einer Lackschicht oder Kunststoffschicht hergestellt wird, die reflektierende Pigmente enthält. Dazu gehören Metallpigmente, vorzugsweise in Blättchenform, wie z. B. Aluminium, Silber, Gold, Platin, Nickel, Chrom, Kupfer, Messing, Bronze, geeignete reflektierende Pigmente sind auch die handelsüblichen Perlglanz-, Fischsilber- oder Fluoreszenzpigmente.

Nach den vorstehend beschriebenen Verfahren hergestellte reflektierende Schichten haften einwandfrei auf der gehärteten Kunstharzpulverschicht. Die Reflexionswerte entsprechen denen, die erhalten werden von nach den bisher bekannten Verfahren hergestellten Reflektoren.

Das erfindungsgemäße Verfahren bringt eine entscheidende Vereinfachung für die Herstellung von Reflektoren.

Das für die Herstellung eines Reflektors bestimmte Blech erhält die gewünschte Form in der Regel durch Tiefziehen. Es kann direkt unbehandelt oder nach einer Nachbehandlung mit dem Kunstharzpulver beschichtet werden. Das Blech kann auch phosphatiert sein.

Das Kunstharzpulver kann mit den üblichen Auftragsmethoden auf das Blech aufgebracht werden, z. B. durch elektrostatisches Aufspritzen oder durch Aufbringen im Wirbelsinterverfahren. Es ist aber auch möglich, das Pulver in Form einer Dispersion in Wasser oder einer anderen Flüssigkeit durch Spritzen oder Tauchen aufzubringen. Das Aufbringen kann auch aus einer derartigen Dispersion unter Stromeinwirkung durch die bekannten elektrochemischen Auftragsverfahren erfolgen.

Mit dem Verfahren lassen sich besonders gute Ergebnisse erzielen bei Verwendung solcher Kunstharzpulver, die durch Einwirkung thermischer Energie weitgehend dreidimensional vernetzen. Hierfür sind geeignet Kunstharzpulver auf Basis von Polyurethanharzen, Epoxydharzen, Polyesterharzen, Acrylatharzen oder Polyvinylharzen. Diese Kunstharzpulver sind pulverförmige Lacke, die die entsprechenden Härter enthalten. Sie können vorzugsweise Pigmente und andere Füllstoffe und Zuschlagstoffe wie z. B. verlaufsfördernde Additive enthalten.

Kunstharzpulver für das neue Verfahren haben eine Korngrößenverteilung von 25% bis 100% kleiner als 32 µm. Es lassen sich hiermit Schichten erzielen, die neben ausgezeichneten Haftungs- und Korrosionsschutzeigenschaften sehr gute Egalisierungseigenschaften der Oberfläche des Beschichtungsmaterials bei gleichzeitig optimaler Oberflächenglätte aufweisen.

Die auf das zu beschichtende Blech aufgebrachte Kunstharzpulverschicht wird mittels thermischer Energie gehärtet. Dies kann geschehen durch Erhitzen in einem Umluftofen oder durch Bestrahlung mit Infrarotstrahlen oder durch Einwirkung von Hochfrequenzenergie. Die Härtung erfolgt in der Regel zwischen 120° und 250° C, und zwar während eines Zeitraumes von 3 bis zu 30 Minuten. Hierbei reduziert sich die Einbrennzeit mit der Erhöhung der Einbrenntemperatur. Die Schichtdicke des Kunstharzpulverüberzuges beträgt in der Regel zwischen 20 und 150 µm. Die Oberfläche der gehärteten Kunstharzpulverschicht ist gleichmäßig und glatt ausgespannt zu lang gezogenen Wellen mit großer Amplitude und geringer Tiefe.

Einen Längsschnitt durch einen fertigbeschichteten Reflektor zeigt relativ schematisch die Zeichnung.

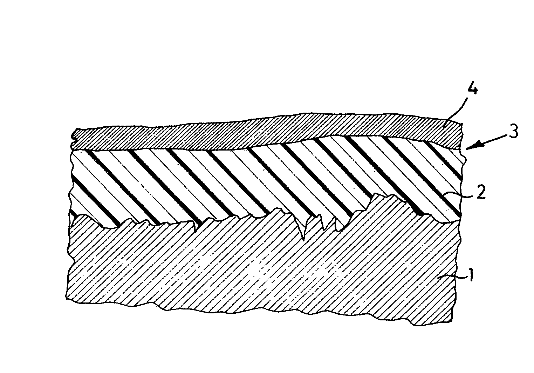

Mit 1 ist in Fig. 1 das Blech bezeichnet, das darüber eine Kunstharzschicht 2 enthält. Die Oberfläche 3 der Kunstharzschicht 2 ist abgedeckt mit einer reflektierende Pigmente enthaltenden Lack- oder Kunststoffschicht 4.

Vorteilhaft wird der Pulverauftrag auf ein phosphatiertes Eisenblech vorgenommen. Durch diese Maßnahme wird der Rostschutz verbessert.

Nach dem erfindungsgemäßen Verfahren werden Reflektoren erhalten, die insbesondere für Kraftfahrzeugscheinwerfer geeignet sind. Man kann dieses Verfahren jedoch ganz allgemein überall da anwenden, wo eine reflektierende Fläche verlangt wird. Diese Flächen können eben geformt sein, sie können aber auch konkav oder konvex geformt sein. Die Reflektoren sind geeignet für Scheinwerfer, Leuchten und Beleuchtungsgeräte.

## Patentansprüche

1. Verfahren zum Herstellen einer reflektierenden Fläche, insbesondere für Scheinwerfer, Leuchten, Beleuchtungsgeräte oder andere reflektierende Oberflächen durch Aufbringen einer thermisch härtbaren Kunstharzpulverschicht auf ein Blech, härten dieser Schicht unter Einwirkung von thermischer Energie zu einem Überzug, der anschließend durch chemisches oder physikalisches Aufbringen mit einer reflektierenden Schicht überzogen wird, dadurch gekennzeichnet, daß die reflektierende Schicht durch Aufbringen einer reflektierende Pigmente enthaltenden Lack- oder Kunststoffschicht hergestellt wird.

2. Verfahren nach Anspruch 1, dadurch gekennzeichnet, daß die reflektierenden Pigmente Aluminium, Silber, Gold, Platin, Nickel, Chrom, Kupfer, Messing, Bronze, in Blättchenform oder handelsübliche Perlglanz-, Fischsilber- oder Fluoreszenzpigmente sind.

3. Verfahren nach Anspruch 1 und 2, dadurch gekennzeichnet, daß das Kunstharzpulver pigmentiert ist.

4. Reflektor für reflektierende Gegenstände, insbesondere für Scheinwerfer, Leuchten, Beleuchtungsgeräte, mit einer auf einem Blech aufgebrachten und thermisch gehärteten Kunstharzpulverschicht, die mit einer reflektierenden Schicht überzogen ist, hergestellt nach einem der Ansprüche 1 bis 3, dadurch gekennzeichnet, daß die reflektierende Schicht (4) eine reflektierende Pigmente enthaltende Lack- oder Kunststoffschicht ist.

5. Reflektor nach Anspruch 4, dadurch gekennzeichnet, daß die reflektierenden Pigmente Aluminium, Silber, Gold, Platin, Nickel, Chrom, Kupfer, Messing, Bronze, in Blättchenform oder handelsübliche Perlglanz-, Fischsilber- oder Fluoreszenzpigmente sind.

6. Reflektor nach Anspruch 4 und 5, dadurch gekennzeichnet, daß die Kunstharzpulverschicht (2) pigmentiert ist.

## Claims

1. A process for the production of a reflecting surface, in particular for headlights, lamps, lighting equipment, or other reflecting surfaces, by applying a heat-curable synthetic resin powder layer onto a metal sheet and curing this layer under the action of heat energy to give a coating which is subsequently coated by chemically or physically applying a reflecting layer characterized by producing the reflecting layer by applying a lacquer layer or plastic layer, containing reflecting pigments.

2. A process according to claim 1, wherein the reflecting pigments are aluminium, silver, gold, platinum, nickel, chromium, copper, brass or bronze in the form of flakes, or are commercially available pearly luster pigments, pearl lacquer pigments or fluorescent pigments.

3. A process according to claims 1 to 2, wherein the synthetic resin powder is pigmented.

4. A reflector for reflecting articles, in particular for headlights, lamps and lighting equipment, having a synthetic resin powder layer applied onto a metal sheet and heat-cured, which layer is coated with a reflecting layer, produced by a process as claimed in any of claims 1 to 3, wherein the reflecting layer (4), is a lacquer layer or plastic layer containing reflecting pigments.

5. A reflector according to claim 4, wherein the reflecting pigments are aluminium, silver, gold, platinum, nickel, chromium, copper, brass or bronze in the form of flakes, or are commercially available pearly luster pigments, pearl lacquer pigments or fluorescent pigments.

6. A reflector according to claims 4 to 5, wherein the layer (2) of synthetic resin powder is pigmented.

## Revendications

1. Procédé de réalisation d'une surface réfléchissante, en particulier pour projecteurs, luminaires, appareils d'éclairage ou autres surfaces réfléchissantes, par application sur une tôle d'une couche de poudre de résine synthétique thermodurcissable, durcissement de cette couche sous l'action d'énergie thermique avec formation d'un revêtement que l'on revêt ensuite d'une couche réfléchissante par application chimique ou physique, caractérisé par le fait que l'on réalise la couche réfléchissante en appliquant une couche de peinture ou de matière synthétique contenant des pigments réfléchissants.

2. Procédé selon la revendication 1, caractérisé par le fait que les pigments réfléchissants sont l'aluminium, l'argent, l'or, le platine, le nickel, le chrome, le cuivre, le laiton, le bronze sous forme de lamelles, ou des pigments commerciaux de nacre, d'argent de poisson ou fluorescents.

3. Procédé selon l'une des revendications 1 et 2, caractérisé par le fait que la poudre de résine synthétique est pigmentée.

4. Réflecteur pour objets réfléchissants, en particulier pour projecteurs, luminaires, appareils d'éclairage, comportant une couche de poudre de résine synthétique appliquée sur une tôle et durcie thermiquement qui est revêtue d'une couche réfléchissante, fabriqué selon l'une des revendications 1 à 3, caractérisé par le fait que la couche réfléchissante (4) est une couche de peinture ou de matière synthétique contenant des pigments réfléchissants.

5. Réflecteur selon la revendication 4, caractérisé par le fait que les pigments réfléchissants sont l'aluminium, l'argent, l'or, le platine, le nickel, le chrome, le cuivre, le laiton, le bronze sous forme de lamelles ou des pigments commerciaux de nacre, d'argent de poisson ou fluorescents.

6. Réflecteur selon l'une des revendications 4 et 5, caractérisé par le fait que la couche de poudre de résine synthétique (2) est pigmentée.